# EUROPEAN PATENT SPECIFICATION

(11) **EP 3 715 159 B1**
(45) Date of publication and mention of the grant of the patent: **20.10.2021**
(21) Application number: 20164827.6
(22) Date of filing: 23.03.2020
(51) Int. Cl.: B60H 1/00, F16C 7/00, F16B 7/10, F16C 7/06

(54) **A VARIABLE-LENGTH TIE ROD MADE OF PLASTIC MATERIAL**
LÄNGENVARIABLE ZUGSTANGE AUS KUNSTSTOFF
BARRE D'ACCOUPLEMENT DE LONGUEUR VARIABLE EN MATIÈRE PLASTIQUE

(30) Priority: 27.03.2019 IT 201900004613
(43) Date of publication of application: 30.09.2020
(73) Proprietor: DENSO THERMAL SYSTEMS S.p.A., 10046 Poirino (Torino) (IT)
(72) Inventor: BENEDETTO, Roberto, I-10046 POIRINO (Torino) (IT); BERGAMO, Luca, I-10046 POIRINO (Torino) (IT)
(74) Representative: Vanzini, Christian

(56) References cited:
- EP-A1- 1 160 402
- DE-A1- 3 537 145
- FR-A1- 2 705 744
- JP-A- S60 161 212

## Description

The present invention refers in general to tie rods for transmitting motion between two parts, and particularly to tie rods used in automotive air-conditioning units.

In air-conditioning units, tie rods are used to drive mixing flaps and for distributing air. They are generally made of plastic or metal and are connected to levers or gears for transmitting motion between actuators and the flaps inside the air-conditioning unit.

In conventional plastic tie rods, the distance between the ends of the tie rod may vary due to manufacturing tolerances and factors associated with stamping, thus causing irregularities in the transmission of motion between the two parts connected to the tie rod.

One purpose of this invention is to provide a solution capable of at least partially overcoming the drawbacks of the prior art. Known tie rods for automotive applications and adjustable in length are described in EP 1 160 402 A1, JP S60 161212 A, FR 2 705 744 A1 and DE 35 37 145 A1. EP 1 160 402 A1 discloses a tie rod according to the preamble of claim 1.

In light of that purpose, the subject matter of the invention is a tie rod, particularly one for an air conditioning unit, comprising
a first tie rod part and a second tie rod part, both made of plastic material, said first tie rod part having an end provided with a seat, and said second tie rod part having an end designed to be inserted into the seat of the first tie rod part, and
a joint designed to form an adjustable-length connection between said first and second tie rod parts,
wherein the joint comprises a first and a second series of ribs formed on said first and second tie rod parts, respectively, said ribs lying transversely to the longitudinal direction of the tic rod and being arranged one after the other in the longitudinal direction of the tic rod, the first series of ribs being capable of engaging with the second series of ribs to define a relative longitudinal position of the tie rod parts with respect to each other,
wherein the joint furthermore comprises a clip hinged to the first tie rod part and carrying the first series of ribs, said clip being foldable so as to snap onto the first tie rod part to lock the end of the second tie rod part within the seat of the first tie rod part, and
wherein the seat of the first tie rod part is designed to slidably guide the end of the second tie rod part when the clip is in the open position.

In the tie rod according to the invention, the length adjustment system makes it possible to achieve the following advantages: - possibility of taking up play due to linkages in the unit; - simple adjustment; possibility of adjusting the tie rod to several positions; - the length can be adjusted after the tie rod has been installed in the air-conditioning unit.

According to one embodiment, when the clip is in the closed position, it forms a wall of the seat of the first tie rod part. Preferably, the clip is connected to the first tie rod part by means of a film hinge.

In particular, the clip may be rotated about an axis parallel to the longitudinal axis of the tie rod.

Preferably, one edge of the clip opposite the hinge and a corresponding area of the seat of the first tie rod part are provided with snap fitting means to lock the clip in its closed position.

In addition, at least one edge of the clip adjacent to the hinge and a corresponding area of the seat of the first tie rod part may be provided with snap fitting means to lock the clip in its closed position.

Preferably, the second tie rod part may have an elastic end tooth protruding in the opposite direction of the series of ribs of the second tie rod part, wherein a groove capable of receiving said end tooth is made in a wall of the seat of the first tie rod part, with a stop being defined in said groove to prevent removal of the end of the second tie rod part from the seat of the first tie rod part.

According to a specific embodiment, the seat of the first tie rod part has an approximately rectangular cross section and the end of the second tie rod part has a cross sectional profile matching said cross-section.

In general, the clip and the first series of ribs are made of a single part together with the first tie rod part, and the second series of ribs is made of a single part together with the second tie rod part.

Additional features and advantages of the tie rod according to the invention will become clearer from the following detailed description of an embodiment of the invention given in reference to the enclosed drawings, provided solely for illustration and non-limiting purposes, in which
figures 1 and 2 are perspective views from opposite sides of a first part of a tie rod according to the invention;
figures 3 and 4 are perspective views from opposite sides of a second part of the tie rod;
figures 5 and 6 are perspective views from opposite sides of the assembled tie rod with a locking clip in the open position;
figure 7 is a perspective view of the tie rod in figures 5 and 6 with the clip in the closed position;
figure 8 is a perspective view of a variant of the tie rod according to the invention, with the locking clip in the open position; and
figures 9 and 10 are perspective views of the tie rod in figure 8 with the clip in the closed position.

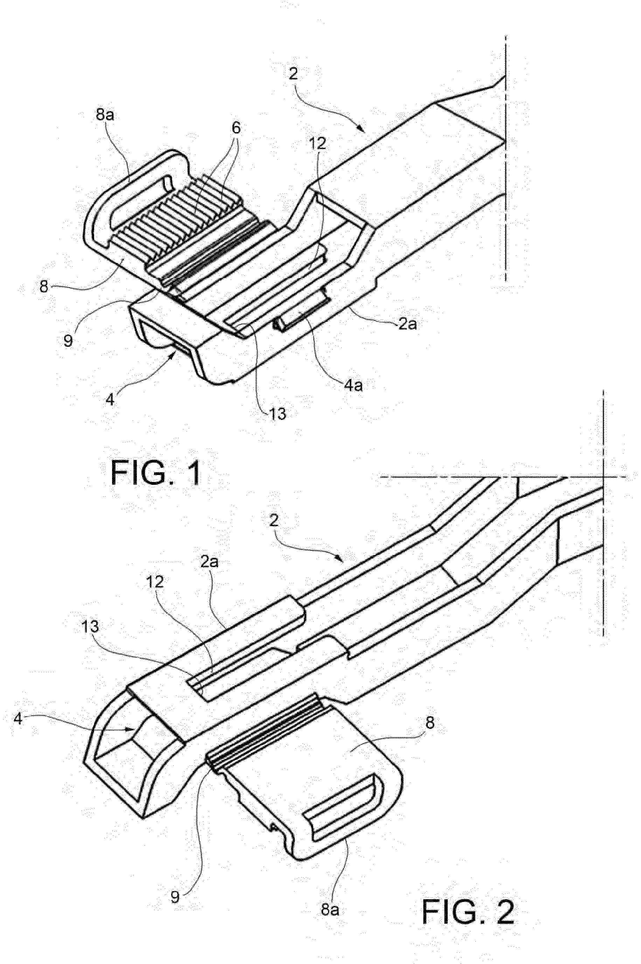

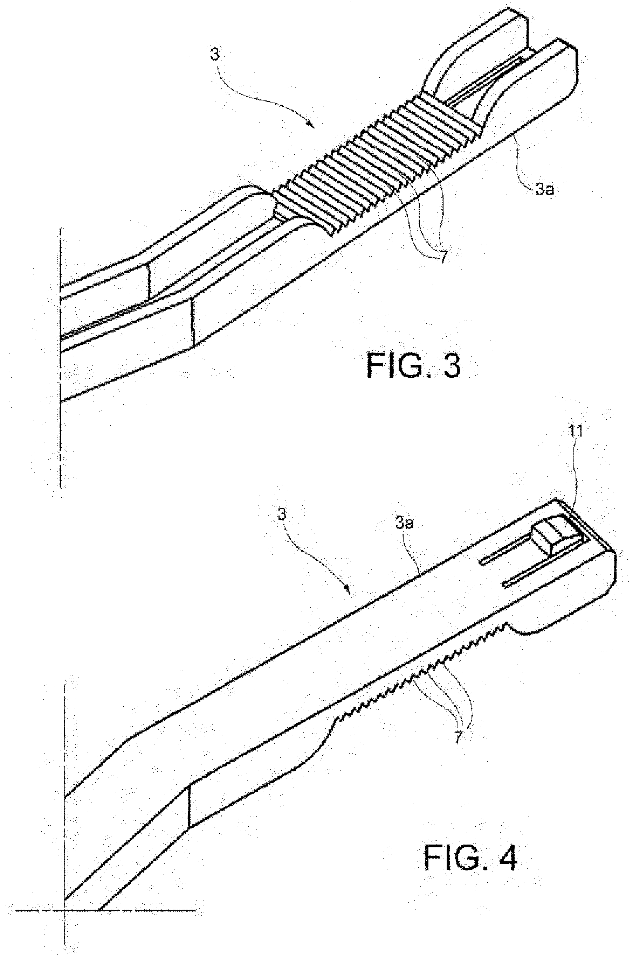

In reference to figures 1 through 7, a tie rod, particularly a tie rod for an air-conditioning unit, is indicated as a whole as item 1. The tie rod comprises a first tie rod part 2 and a second tie rod part 3, both made of plastic material, which are shown separately in figures 1-2 and in figures 3-4. First tie rod part 2 has end 2a provided with a seat 4, and second tie rod part 3 has an end 3a designed to be inserted into seat 4 of first tie rod part 2. The other ends of first and second tie rod parts 2 and 3, which are not shown in the figures, are typically designed to connect the tie rod to two corresponding parts between which motion is intended to be transmitted. First and second tie rod parts 2 and 3 are two parts that are made as a single piece; the items described in the remainder are therefore entirely made with one or the other tie rod part.

In addition, tie rod 1 comprises a joint 5 designed to make a length-adjustable connection between first tie rod part 2 and second tie rod part 3.

Joint 5 comprises a first series of ribs 6 made at end 2a of first tie rod part 2, and a second series of ribs 7 made at end 3a of second tie rod part 3. Ribs 6 and 7 of each series lie transversely with respect to the longitudinal direction of tie rod 1 and are arranged one after the other in the longitudinal direction of tie rod 1.

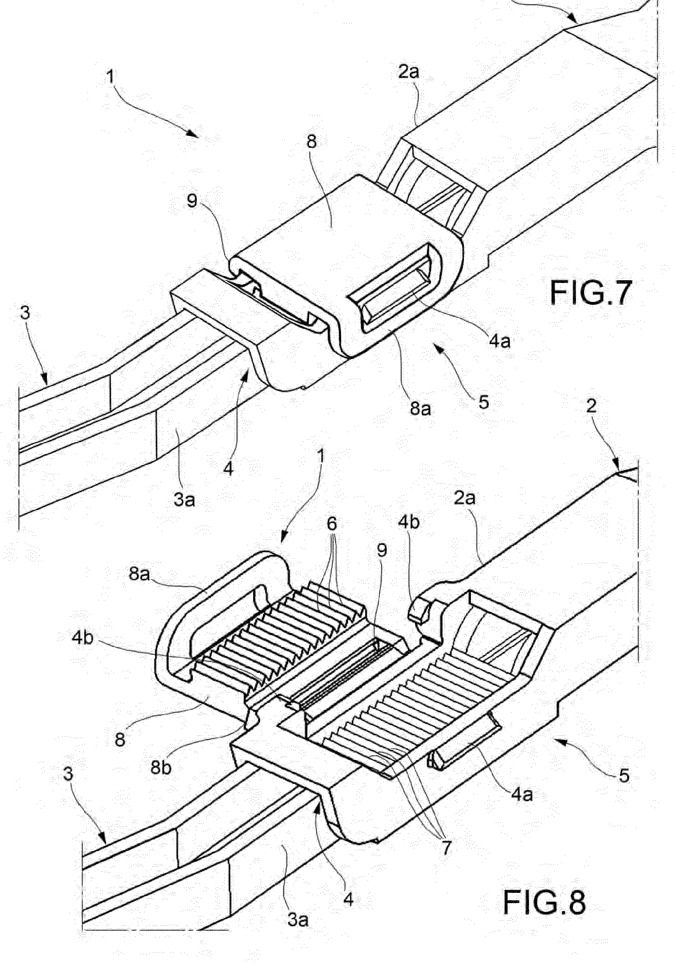

In addition, joint 5 comprises a clip 8 hinged to first tie rod part 2 at end 2a thereof. In particular, clip 8 is connected to first tie rod part 2 by means of a film hinge 9 and can be rotated about an axis parallel to the longitudinal axis of tie rod 1. Clip 8 carries first series of ribs 6 and can be folded from an open position (shown in figures 1-2 and 5-6), in which it leaves one side of seat 4 of first tie rod part 2 exposed, to a closed position (shown in figure 7), in which it snaps closed on first tie rod part 2, thus forming a lateral wall of seat 4 of first tie rod part 2.

An edge of clip 8 opposite hinge 9 and a corresponding area of seat 4 of first tie rod part 2 are provided with snap fitting means to lock clip 8 in its closed position. In the illustrated example, these fitting means include a hook 8a made in the edge of clip 8 and a corresponding tooth 4a in an external lateral surface of seat 4.

Seat 4 of first tie rod part 2 is designed to slidably guide end 3a of second tie rod part 3 when said end is inserted into seat 4. In particular, seat 4 of first tie rod part 2 has an approximately rectangular cross section and end 3a of second tie rod part 3 has a cross sectional profile matching said cross-section, for example a C-shaped or H-shaped profile.

In addition, second tie rod part 3 has an elastic end tooth 11 protruding in the opposite direction of series of ribs 7 of second tie rod part 3. A groove 12 capable of receiving end tooth 11 of second tie rod part 3 during an initial insertion phase of second tie rod part 3 into seat 4, is made in a lateral wall of seat 4 of first tie rod part 2. A stop 13 capable of preventing the removal of end 3a of second tie rod part 3 from seat 4 of first tie rod part 2, is defined in groove 12.

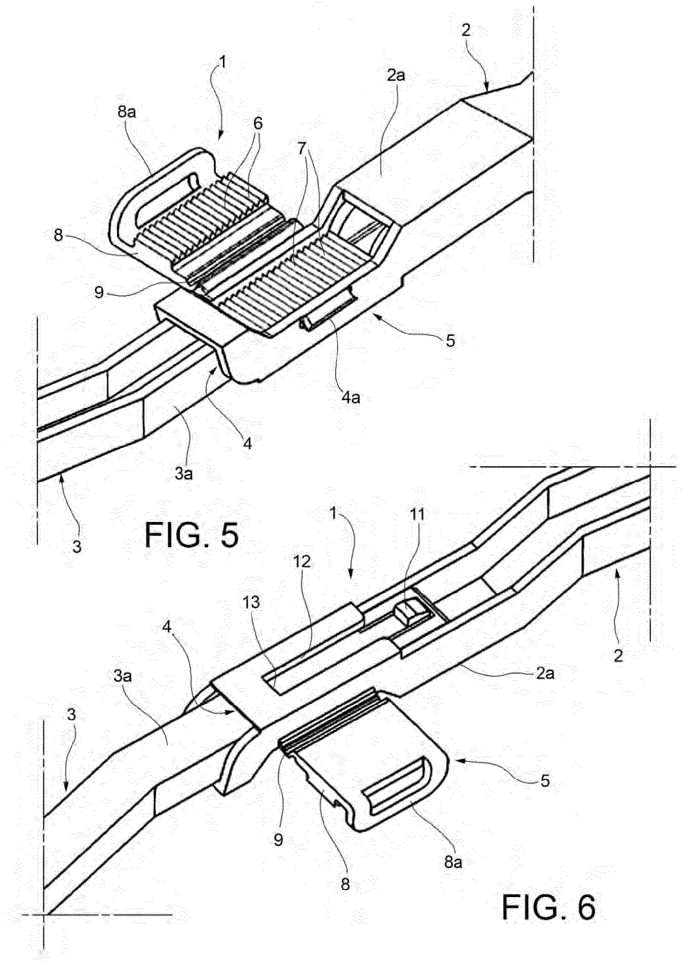

When end 3a of second tie rod part 3 is inserted into seat 4 of first tie rod part 2, end tooth 11 is first deflected inward and remains in this position until the tip of tie rod part 3 goes beyond the position of stop 13, thus allowing end tooth 11 to snap into groove 12. The sliding of end 3a of second tie rod part 3 is allowed because the clip is in the open position (figures 5 and 6).

Once the desired relative longitudinal position of tie rod parts 2 and 3 is reached, clip 8 is folded so as to be snapped closed on first tie rod part 2. In this way, first series of ribs 6 of clip 8 is caused to engage with second series of ribs 7 of second end part 3 to lock end 3a of second tie rod part 3 in seat 4 of first tie rod part 2 (figure 7).

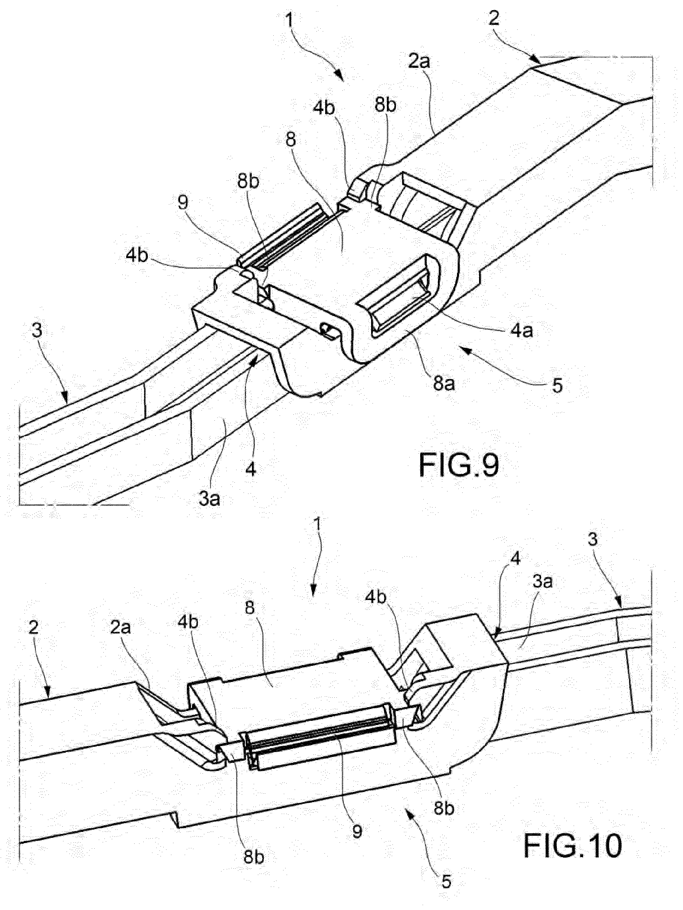

Figures 8-10 show a variant of the tie rod described above which is provided with additional parts for hooking clip 8 in its closed position. In this way it is possible to achieve improved locking of clip 8.

In particular, both edges of clip 8 adjacent to hinge 9 and corresponding areas of seat 4 of the first tie rod part are provided with snap fitting means to lock clip 8 in its closed position. In the illustrated example, these fitting means include two teeth 8b made on the lateral edges of clip 8, and corresponding fastening parts 4b made on the edge of the lateral window of seat 4.

The invention is not intended to be limited to the embodiments described and illustrated herein. The scope of the invention is defined by the following claims.

## Claims

1. A tie rod, particularly for an air conditioning unit, comprising
a first tie rod part (2) and a second tie rod part (3), both made of plastic material, said first tie rod part (2) having an end (2a) provided with a seat (4), and said second tie rod part (3) having an end (3a) designed to be inserted into the seat (4) of the first tie rod part (2), and
a joint (5) designed to form an adjustable-length connection between said first and second tie rod parts,
wherein the joint (5) comprises a first and a second series of ribs (6, 7) formed on said first and second tie rod parts, respectively, said ribs (6, 7) extending transversely to the longitudinal direction of the tie rod (1) and being arranged one after the other in the longitudinal direction of the tie rod (1), the first series of ribs (6) being capable of engaging with the second series of ribs (7) to define a relative longitudinal position of the tie rod parts (2, 3) with respect to each other,
wherein the joint (5) further comprises a clip (8) hinged to the first tie rod part (2) and carrying the first series of ribs (6), said clip being foldable so as to snap onto the first tie rod part (2) to lock the end (3a) of the second tie rod part (3) within the seat (4) of the first tie rod part (2),
said tie rod being **characterized in that** the seat (4) of the first tie rod part (2) is designed to slidably guide the end (3a) of the second tie rod part (3) when the clip (8) is in the open position.

2. A tie rod according to claim 1, wherein the clip (8), in its closed position, forms a wall of the seat (4) of the first tie rod part (2).

3. A tie rod according to claim 1 or 2, wherein the clip (8) is connected to the first tie rod part (2) by a film hinge (9).

4. A tie rod according to any of the foregoing claims, wherein the clip (8) can rotate about an axis parallel to the longitudinal axis of the tie rod (1).

5. A tie rod according to any of the foregoing claims, wherein an edge of the clip (8) opposite the hinge (9) and a corresponding area of the seat (4) of the first tie rod part (2) are provided with snap fitting means (8a, 4a) to lock the clip (8) in its closed position.

6. A tie rod according to any of the foregoing claims, wherein at least one edge of the clip (8) adjacent to the hinge (9) and a corresponding area of the seat (4) of the first tie rod part (2) are provided with snap fitting means (8b, 4b) to lock the clip (8) in its closed position.

7. A tie rod according to any of the foregoing claims, wherein the second tie rod part (3) has an elastic end tooth (11) protruding in the opposite direction of the series of ribs (7) of the second tie rod part (3), wherein a groove (12) capable of receiving said end tooth is made in a wall of the seat (4) of the first tie rod part (2), with a stop (13) being defined in said groove and being capable of prevent removal of the end (3a) of the second tie rod part (3) from the seat (4) in the first tie rod part (2).

8. A tie rod according to any of the foregoing claims, wherein the seat (4) of the first tie rod part (2) has an approximately rectangular cross section and the end (3a) of the second tie rod part (3) has a cross sectional profile matching said cross-section.

9. A tie rod according to any of the foregoing claims, wherein the clip (8) and the first series of ribs (6) are made of a single part together with the first tie rod part (2) and wherein the second series of ribs (7) is made of a single part together with the second tie rod part (3).

## Patentansprüche

1. Zugstange, insbesondere für eine Klimaanlageneinheit, mit
einem ersten Zugstangenteil (2) und einem zweiten Zugstangenteil (3), die beide aus Kunststoff ausgebildet sind, bei der der erste Zugstangenteil (2) ein Ende (2a), das mit einer Aufnahme (4) versehen ist, aufweist, und der zweite Zugstangenteil (3) ein Ende (3a), das dazu ausgebildet ist, in die Aufnahme (4) des ersten Zugstangenteils (2) eingefügt zu werden, aufweist, und
einer Verbindung (5), die dazu ausgebildet ist, eine längeneinstellbare Verbindung zwischen dem ersten und dem zweiten Zugstangenteil auszubilden,
bei der die Verbindung (5) eine erste und eine zweite Reihe von Rippen (6, 7), die auf dem ersten bzw. zweiten Zugstangenteil ausgebildet sind, aufweist, bei der sich die Rippen (6, 7) quer zu der longitudinalen Richtung der Zugstange (1) erstrecken und eine nach der anderen in der longitudinalen Richtung der Zugstange (1) angeordnet sind, die erste Reihe von Rippen (6) imstande ist, mit der zweiten Reihe von Rippen (7) zum Definieren einer relativen longitudinalen Position der Zugstangenteile (2, 3) in Bezug aufeinander ineinanderzugreifen,
bei der die Verbindung (5) ferner einen Clip (8), der gelenkig mit dem ersten Zugstangenteil (2) verbunden ist und die erste Reihe von Rippen (6) trägt, aufweist, bei der der Clip so faltbar ist, dass er zum Arretieren des Endes (3a) des zweiten Zugstangenteils (3) in der Aufnahme (4) des ersten Zugstangenteils (2) auf den ersten Zugstangenteil (2) schnappt,
bei der die Zugstange **dadurch gekennzeichnet ist, dass** die Aufnahme (4) des ersten Zugstangenteils (2) dazu ausgebildet ist, das Ende (3a) des zweiten Zugstangenteils (3) gleitend verschiebbar zu führen, wenn der Clip (8) in der offenen Position ist.

2. Zugstange nach Anspruch 1, bei der der Clip (8) in seiner geschlossenen Position eine Wand der Aufnahme (4) des ersten Zugstangenteils (2) ausbildet.

3. Zugstange nach Anspruch 1 oder 2, bei der der Clip (8) mit dem ersten Zugstangenteil (2) durch ein Filmscharnier (9) verbunden ist.

4. Zugstange nach einem der vorhergehenden Ansprüche, bei der sich der Clip (8) um eine Achse parallel zu der longitudinalen Achse der Zugstange (1) drehen kann.

5. Zugstange nach einem der vorhergehenden Ansprüche, bei der ein Rand des Clips (8) gegenüber dem Scharnier (9) und ein entsprechender Bereich der Aufnahme (4) des ersten Zugstangenteils (2) mit Schnappverschlussmitteln (8a, 4a) zum Arretieren des Clips (8) in seiner geschlossenen Position versehen sind.

6. Zugstange nach einem der vorhergehenden Ansprüche, bei der mindestens ein Rand des Clips (8) angrenzend an das Scharnier (9) und ein entsprechender Bereich der Aufnahme (4) des ersten Zugstangenteils (2) mit Schnappverschlussmitteln (8b, 4b) zum Arretieren des Clips (8) in seiner geschlossenen Position versehen sind.

7. Zugstange nach einem der vorhergehenden Ansprüche, bei der der zweite Zugstangenteil (3) einen elastischen Endzahn (11), der in der der Reihe von Rippen (7) des zweiten Zugstangenteils (3) entgegengesetzten Richtung vorsteht, aufweist, bei der eine Nut (12), die imstande ist, den Endzahn aufzunehmen, in einer Wand der Aufnahme (4) des ersten Zugstangenteils (2) ausgebildet ist, bei der ein Anschlag (13) in der Nut definiert ist und imstande ist, eine Entfernung des Endes (3a) des zweiten Zugstangenteils (3) aus der Aufnahme (4) in dem ersten Zugstangenteil (2) zu verhindern.

8. Zugstange nach einem der vorhergehenden Ansprüche, bei der die Aufnahme (4) des ersten Zugstangenteils (2) einen annähernd rechteckigen Querschnitt aufweist und das Ende (3a) des zweiten Zugstangenteils (3) ein Querschnittsprofil aufweist, das zu dem Querschnitt passt.

9. Zugstange nach einem der vorhergehenden Ansprüche, bei der der Clip (8) und die erste Reihe von Rippen (6) zusammen mit dem ersten Zugstangenteil (2) aus einem einzelnen Teil ausgebildet sind, und bei der die zweite Reihe von Rippen (7) zusammen mit dem zweiten Zugstangenteil (3) aus einem einzelnen Teil ausgebildet ist.

## Revendications

1. Barre d'accouplement, en particulier pour une unité de climatisation, comprenant
une première partie de barre d'accouplement (2) et une seconde partie de barre d'accouplement (3), toutes deux en matière plastique, ladite première partie de barre d'accouplement (2) ayant une extrémité (2a) dotée d'un siège (4), et ladite seconde partie de barre d'accouplement (3) ayant une extrémité (3a) conçue pour être insérée dans le siège (4) de la première partie de barre d'accouplement (2), et
une articulation (5) conçue pour former une liaison de longueur ajustable entre lesdites première et seconde parties de barre d'accouplement,
dans laquelle l'articulation (5) comprend une première et une seconde série de côtes (6, 7) formées sur lesdites première et seconde parties de barre d'accouplement, respectivement, lesdites côtes (6, 7) s'étendant transversalement par rapport à la direction longitudinale de la barre d'accouplement (1) et étant agencées les unes après les autres dans la direction longitudinale de la barre d'accouplement (1), la première série de côtes (6) étant capable de venir en prise avec la seconde série de côtes (7) pour définir une position longitudinale relative des parties de barre d'accouplement (2, 3) l'une par rapport à l'autre,
dans laquelle l'articulation (5) comprend en outre une pince (8) raccordée par charnière à la première partie de barre d'accouplement (2) et portant la première série de côtes (6), ladite pince étant pliable de manière à s'enclencher sur la première partie de barre d'accouplement (2) pour verrouiller l'extrémité (3a) de la seconde partie de barre d'accouplement (3) dans le siège (4) de la première partie de barre d'accouplement (2),
ladite barre d'accouplement étant **caractérisée en ce que** le siège (4) de la première partie de barre d'accouplement (2) est conçu pour guider de manière coulissante l'extrémité (3a) de la seconde partie de barre d'accouplement (3) lorsque la pince (8) est dans la position ouverte.

2. Barre d'accouplement selon la revendication 1, dans laquelle la pince (8), dans sa position fermée, forme une paroi du siège (4) de la première partie de barre d'accouplement (2).

3. Barre d'accouplement selon la revendication 1 ou 2, dans laquelle la pince (8) est reliée à la première partie de barre d'accouplement (2) par une charnière (9) pelliculaire.

4. Barre d'accouplement selon l'une quelconque des revendications précédentes, dans laquelle la pince (8) peut tourner autour d'un axe parallèle à l'axe longitudinal de la barre d'accouplement (1).

5. Barre d'accouplement selon l'une quelconque des revendications précédentes, dans laquelle un bord de la pince (8) opposé à la charnière (9) et une zone correspondante du siège (4) de la première partie de barre d'accouplement (2) sont dotés de moyens d'ajustement par enclenchement (8a, 4a) pour verrouiller la pince (8) dans sa position fermée.

6. Barre d'accouplement selon l'une quelconque des revendications précédentes, dans laquelle au moins un bord de la pince (8) adjacent à la charnière (9) et une zone correspondante du siège (4) de la première partie de barre d'accouplement (2) sont dotés de moyens d'ajustement par enclenchement (8b, 4b) pour verrouiller la pince (8) dans sa position fermée.

7. Barre d'accouplement selon l'une quelconque des revendications précédentes, dans laquelle la seconde partie de barre d'accouplement (3) a une dent d'extrémité élastique (11) faisant saillie dans la direction opposée de la série de côtes (7) de la seconde partie de barre d'accouplement (3), dans laquelle une rainure (12) capable de recevoir ladite dent d'extrémité est faite dans une paroi du siège (4) de la première partie de barre d'accouplement (2), avec une butée (13) qui est définie dans ladite rainure et qui est capable d'empêcher un retrait de l'extrémité (3a) de la seconde partie de barre d'accouplement (3) du siège (4) dans la première partie de barre d'accouplement (2).

8. Barre d'accouplement selon l'une quelconque des revendications précédentes, dans laquelle le siège (4) de la première partie de barre d'accouplement (2) a une coupe transversale approximativement rectangulaire et l'extrémité (3a) de la seconde partie de barre d'accouplement (3) a un profil en coupe transversale coïncidant avec ladite coupe transversale.

9. Barre d'accouplement selon l'une quelconque des revendications précédentes, dans laquelle la pince (8) et la première série de côtes (6) sont faites d'une seule pièce conjointement avec la première partie de barre d'accouplement (2) et dans laquelle la seconde série de côtes (7) est faite d'une seule pièce conjointement avec la seconde partie de barre d'accouplement (3).
